# EUROPÄISCHE PATENTSCHRIFT

(11) **EP 0 556 350 B1**
(45) Veröffentlichungstag und Bekanntmachung des Hinweises auf die Patenterteilung: **20.11.1996**
(21) Anmeldenummer: 92911038.5
(22) Anmeldetag: 26.05.1992
(51) Int. Cl.: C09D 5/18, C08K 5/521, C08L 61/20

(54) **ZUSAMMENSETZUNG MIT INTEGRIERTEN INTUMESZIERENDEN EIGENSCHAFTEN**
COMPOSITION WITH INTEGRAL INTUMESCENCE PROPERTIES
COMPOSITION A PROPRIETES D'INTUMESCENCE INTEGREES

(30) Priorität: 09.09.1991 AT 1790/91; 27.11.1991 WO PCT/EP91/02247
(43) Veröffentlichungstag der Anmeldung: 25.08.1993
(73) Patentinhaber: Chemische Fabrik Budenheim Rudolf A. Oetker, D-55257 Budenheim (DE)
(72) Erfinder: ASLIN, David, Charles, Belper Derbyshire (GB)
(74) Vertreter: Weinhold, Peter, Dr.
(86) Internationale Anmeldenummer: EP9201186
(87) Internationale Veröffentlichungsnummer: WO9305118

(56) Entgegenhaltungen:
- EP-A- 0 139 401
- EP-A- 0 449 689
- CH-A- 669 793
- FR-A- 2 413 458
- US-A- 4 026 711
- US-A- 4 210 452
- US-A- 4 339 357
- US-A- 4 632 946

## Beschreibung

Die vorliegende Erfindung betrifft eine Zusammensetzung mit integrierten intumeszierenden Eigenschaften, insbesondere eine Beschichtung auf der Basis von Phosphorsäureteilestermischungen, deren Herstellung und deren Verwendung zur Bildung von intumeszierenden Filmen, Beschichtungen usw.

Die erfindungsgemäßen Zusammensetzungen weisen über den derzeitigen Stand der Technik hinausgehende Anwendungsmöglichkeiten auf.

Intumeszierende Beschichtungen werden herkömmlicherweise auf die Oberfläche von Bauteilen aufgebracht. Mit derartigen Beschichtungen werden z.B. auch Abtrennungen und Abschottungen zwischen einzelnen Bauabschnitten gegen Brandeinwirkung geschützt. In diesem Anwendungsfall ist es die Aufgabe der Beschichtung, die Flammenausbreitung von einem Bauabschnitt zum nächsten zu verhindern. Intumeszierende Beschichtungen werden auch auf die Oberfläche brennbarer Substrate aufgetragen, um deren Entflammbarkeit zu vermindern, aber auch um gegen andere Einflüsse schützende oder dekorative Beschichtungen zu erzielen.

Nach dem Stand der Technik bestehen intumeszierende Beschichtungen aus einer sauren Phosphorsäureverbindung, einer Polyhydroxyverbindung und einem Treibmittel. Diese Bestandteile werden mit einem herkömmlichen polymeren Bindemittel gebunden. Bei diesem Bindemittel kann es sich z.B. um ein acrylisches Styrol- oder Vinyltoluol-Copolymer, ein Styrol- oder Vinyltoluol-Butadien-Copolymer oder ein Styrol- oder Vinyltoluol-Acrylnitril-Copolymer handeln. Alternativ werden auch Polyvinylalkohol, Polyvinylacetat, Polyvinylbutyral, Harnstoff- oder Melamin-Formaldehydharze und Vinylchlorid-Vinylidenchlorid-Copolymere eingesetzt. Auch die Verwendung von Epoxidharzen in Kombination mit verschiedenen aminofunktionellen Härtern ist bekannt. In allen diesen Formulierungen sind chlorierte Paraffine oder gegebenenfalls chlorierte Phosphorsäureester als Weichmacher enthalten.

Intumeszierende Flammschutzmittel wirken durch die Bildung einer sich unter Hitzeeinwirkung bildenden, aufgeblähten, isolierenden Schicht aus schwer entflammbarem Material, die das Substrat vor Sauerstoffzutritt und/oder Überhitzung schützt und dadurch die Entflammung von brennbaren Substraten verhindert oder verzögert oder die Veränderung der mechanischen und statischen Eigenschaften tragender Bauteile durch Hitzeeinwirkung verhindert oder zumindest verzögert.

Die Eigenschaften der jeweiligen Formulierungen hängen sehr stark von deren Zusammensetzung ab, die deshalb einer exakten Abstimmung bedarf. So führt z.B. eine größere Aufblähung (Intumeszenz) zwar zu einer dickeren Schutzschicht, gleichzeitig löst sich diese aber aufgrund einer verringerten mechanischen Stabilität leichter vom Substrat ab und wird damit weniger wirksam. Intumeszierende Systeme sind seit langem bekannt und beschrieben. Die GB-A-2 151 237 beschreibt Formulierungen, die chlorierte Polymere, Novolakharze und chlor- oder phosphorhaltige Weichmacher enthalten. Die GB-A-2 012 296 beschreibt Formulierungen, die Blähgraphit, Aluminiumhydroxid und Bindemittelsysteme auf der Basis von halogenierten Elastomeren und Alkylphenol-Formaldehydharz enthalten. Die GB-A-1 604 908 erwähnt Produkte mit Vermikulit und anorganischen Fasern als Füllstoffen sowie Elastomerbindemitteln und Ton.

Konventionelle Systeme bestehen aus einem Bindemittel des oben beschriebenen Typs, einem Kohlenstoffgerüstbildner, einem Treibmittel und einem Säurebildner als wesentlichen Komponenten.

Als Kohlenstoffgerüstbildner werden Polyhydroxyverbindungen wie Pentaerythrit, Dipentaerythrit, Tripentaerythrit, Stärke und Zucker eingesetzt. Treibmittel sind z.B. stickstoffhaltige Verbindungen wie Melamin, Harnstoff, Dicyandiamid und Guanidin. Als Säurebildner finden meist Ammoniumphosphate, bevorzugt Ammoniumpolyphosphate, Verwendung. Weitere Zusätze sind z.B. anorganische Fasern, die die mechanische Festigkeit der intumeszierenden Schicht erhöhen und/oder deren Abtropfen verhindern sollen, und Metalloxide, die als Rauchgasunterdrükker fungieren. Typische Beispiele für derartige Formulierungen finden sich in US-A-4 442 157 und 3 562 197, GB-A-755 551 sowie EP-A-138 546.

Aus der Literatur geht auch hervor, daß die einzelnen Komponenten in ihrer Wirkungsweise nicht auf eine einzige Funktion beschränkt sind. Dies ist z.B. aus GB-A-2 007 689 ersichtlich, wo ein Reaktionsprodukt eines Amids mit einer Aldehydverbindung sowohl als Kohlenstoffgerüstbildner als auch als Treibmittel wirkt. Ein in EP-A-139 401 beschriebenes Epoxidharz fungiert sowohl als Bindemittel als auch als Treibmittel. Die US-A-3 969 291 beschreibt ein wasserlösliches Amidopolyphosphat, das als Säurebildner und Treibmittel wirkt.

Die Wirksamkeit derartiger Flammschutzsysteme über einen längeren Zeitraum wird oft dadurch begrenzt, daß darin enthaltene Bestandteile mit niedrigem Molekulargewicht durch Auswaschung, Verflüchtigung oder andere Mechanismen aus dem System entfernt werden. Die Wirksamkeit konventioneller Flammschutzformulierungen nach längerer Lagerung oder Bewitterung ist deshalb zweifelhaft und muß im Einzelfall durch Brandtests überprüft werden. Um diesen Nachteil auszugleichen, wurde versucht, Komponenten mit höherem Molekulargewicht zu verwenden, z.B. Stärke, Proteine, Polypentaerythritverbindungen und Epoxidharze als Kohlenstoffgerüstbildner und Aminoplaste und ähnliche Verbindungen als Treibmittel.

Nach dem Stand der Technik setzen sich konventionelle phosphatkatalysierte, intumeszierende Beschichtungen somit wie folgt zusammen:
(i) Als Säurequelle (Katalysator) werden üblicherweise Ammoniumphosphate, meist Ammoniumpolyphosphate, Ammoniumorthophosphate und Melaminphosphate, mit einem Anteil von ca. 25 Gew.-% an der gesamten Formulierung eingesetzt.
(ii) Als Kohlenstoffgerüstbildner wirkt eine organische Verbindung, üblicherweise ein Polyol, die durch die freigesetzte Säure zu Kohlenstoff zersetzt wird (Carbonifizierung). Hierfür werden üblicherweise Pentaerythrit, Dipentaerythrit, Tripentaerythrit, Stärke oder Stärkederivate eingesetzt.
(iii) Ein Treibmittel führt durch Freisetzung eines inerten Gases zur Bildung einer aufgeschäumten (intumeszierten) Schicht. Übliche Treibmittel sind z.B. Melamin, Melaminsalze, Melaminderivate und/oder Dicyandiamid.

Der Wirkungsmechanismus konventioneller intumeszierender Systeme bei Hitzeeinwirkung kann vereinfachend wie folgt beschrieben werden:
1. Bei einer Temperatur oberhalb von 70°C erweicht das Bindemittelsystem zu einer hochviskosen Schmelze.
2. Oberhalb etwa 90°C beginnt die Zersetzung von Treibmittel und Weichmacher unter Freisetzung nicht brennbarer Gase, die eine inerte Gasschicht über der Beschichtung bilden und eine Entflammung der brennbaren organischen Bestandteile der Beschichtung verhindern.
3. Der Säurebildner setzt oberhalb etwa 150°C Ammoniak frei, wodurch freie Säure zurückbleibt, die die Viskosität der Schmelze erniedrigt.
4. Der Kohlenstoffgerüstbildner schmilzt und reagiert mit der unter 3. freigesetzten Säure unter Wasserabspaltung und Carbonifizierung.
5. Das Treibmittel zersetzt sich unter Entwicklung inerter Gase und bläht die Schmelze zu einem weichen Schaum auf.
   Bei Temperaturen um 210°C laufen die Reaktionen 3., 4. und 5. simultan ab.
6. Durch teilweise Zersetzung geht der weiche Schaum in eine relativ starre Schicht über.
7. Die noch vorhandene freie Säure reagiert mit anwesendem Pigmentmaterial (Metalloxiden) unter Bildung von Phosphaten.
8. Die kohlenstoffhaltige Schutzschicht wird von der Flamme teilweise abgetragen, was die isolierende Wirkung verringert. Phosphor kann ebenfalls aus dem System entweichen, falls keine Metalloxide für eine Abfangreaktion (7.) zur Verfügung stehen.
9. Je nach Zusammensetzung des Rückstandes können Phasenübergänge oder ein Schmelzen eintreten.

Die nach diesem Reaktionsschema wirkenden intumeszierenden Beschichtungen weisen einen gravierenden Nachteil auf, der ihren Anwendungsbereich deutlich einschränkt. Dieser Nachteil besteht darin, daß es sich bei diesen Systemen um Mehrkomponentensysteme handelt, deren oben beschriebene Einzelbestandteile zuerst Zersetzungs- und Umwandlungsreaktionen eingehen müssen, um die gewünschte intumeszierte Schutzschicht zu bilden. Außerdem sind die Transport- und Diffusionsvergänge, die zur Bildung einer homogenen reaktionsfähigen Schmelze führen, der geschwindigkeitsbestimmende Faktor für die zur Ausbildung der Schutzschicht führende Gesamtreaktion.

Die Zersetzungsreaktionen der Komponenten sind jeweils abhängig von der Temperatur. Für jede dieser Reaktionen gibt es ein Temperaturminimum, oberhalb dem die Zersetzung beginnt. Auch wenn die zur Ausbildung der intumeszierten Schutzschicht führenden Reaktionen eine niedrige Temperaturbarriere aufweisen, wird diese Reaktionsfolge dennoch erst ablaufen, wenn die Zersetzungsreaktionen der Komponenten erfolgt sind.

Darüber hinaus ist die am meisten verwendete Säurequelle, d.h. Ammoniumpolyphosphat, zwar wenig wasserlöslich, löst sich aber in salzhaltigen Medien sehr gut. So kann z.B. eine entsprechende Formulierung in Wasser zufriedenstellend beständig sein, während in Salzwasser oder Schwefeldioxid enthaltenden wäßrigen Lösungen die obige Komponente vermehrt aus der Formulierung herausgelöst wird.

Ein Vorteil der konventionellen intumeszierenden Systeme ist es jedoch, daß die ablaufenden Zersetzungsreaktionen endotherm sind. Dadurch verläuft die Bildung der Schutzschicht direkt proportional zu der zur Verfügung stehenden Energiemenge. Die Bildung der Schaumschicht wird daher vom Brandgeschehen bestimmt und ist nicht unabhängig davon.

Es wurden Versuche unternommen, die oben beschriebenen Nachteile herkömmlicher intumeszierender Systeme dadurch zu überwinden, daß Säurebildner, Kohlenstoffgerüstbildner und Treibmittel in einer Verbindung kombiniert wurden. Im Jahre 1967 gelang dies Sawco und Ricetiello (Journal of Coating Technology 49 (1977), Seite 624). Die von diesen Autoren vorgeschlagenen Zusammensetzungen sprechen zwar auf hohe Wärmeströme an, versagen aber bei niedrigen Wärmeströmen, wie sie in realen Brandsituationen auftreten. Ein weiterer Nachteil dieser Systeme besteht darin, daß der Reaktionsverlauf teilweise exotherm ist. Dies führt dem System zusätzliche Energie zu und macht den Vorgang der Intumeszenz unabhängig vom tatsächlichen Brandgeschehen. Die von Sawco und Ricetiello beschriebenen Salze müssen darüber hinaus mit einem Bindemittelsystem fixiert werden. Allerdings liegt hier bereits ein System vor, in dem alle wesentlichen Funktionen des konventionellen, phosphatkatalysierten Systems in einem Polymermolekül zusammengefaßt sind. Da in diesem System keine labilen Gruppen vorhanden sind und alle Wirkungsmechanismen in einem Molekül vereinigt sind, fallen Transportvorgänge nicht ins Gewicht. So wird z.B. bei der Reaktion konventioneller Systeme die Polyolkomponente durch die intermediär gebildete freie Phosphorsäure dehydratisiert. Als Zwischenstufe werden dabei Phosphorsäureester gebildet, die sich sofort wieder zersetzen, weil ihre Zersetzungspunkte tiefer liegen als die Reaktionstemperatur. Wären die Phosphatester bereits in der Ausgangsformulierung vorhanden, begänne die Intumeszenzreaktion bereits bei der niedrigeren Zersetzungstemperatur der Phosphatester und nicht erst bei der höheren Zersetzungstemperatur des Ammoniumpolyphosphats.

Untersucht man ein herkömmliches intumeszierendes System mittels thermogravimetrischer Methoden, so stellt man fest, daß sowohl nach dem Auftragen der Beschichtung als auch bei der Beflammung Gewichtsverluste auftreten, wie dies in der nachfolgenden Tabelle 1 an einem Beispiel gezeigt ist.

**TABELLE 1**

| Bestandteil | feuchte Beschichtung (%) | trockene Beschichtung (%) | intumesziertes Kohlenstoffgerüst (%) | unbrennbarer Rückstand (%) |
|---|---|---|---|---|
| Lösungsmittel | 30 | - | - | - |
| Bindemittel | 20 | 20 | 10 | - |
| Säurebildner | 25 | 25 | 17,5 | 17,5 |
| C-Gerüstbildn. | 8 | 8 | 5 | - |
| Treibmittel | 8 | 8 | - | - |
| Pigment | 9 | 9 | 9 | 9 |
| Summe | 100 | 70 | 41,5 | 26,5 |

Aus Tabelle 1 ergibt sich, daß am Ende der Beflammung nur noch 26,5% der ursprünglich aufgetragenen Schutzbeschichtung zur Isolierwirkung beitragen.

Aufgabe der vorliegenden Erfindung ist es demnach, eine Zusammensetzung mit integrierten intumeszierenden Eigenschaften zur Verfügung zu stellen, die die oben beschriebenen Nachteile herkömmlicher intumeszierender Systeme vermeidet oder zumindest abmildert.

Erfindungsgemäß wurde gefunden, daß bestimmte Orthophosphorsäureester von carbonifizierenden Polyolen, die mit bestimmten reaktiven Polymeren vernetzt werden, Polymere mit integrierten intumeszierenden Eigenschaften darstellen. Es wurde auch ein Verfahren entwickelt, mit dem diese Orthophosphorsäureester hergestellt werden können, ohne daß der übliche Syntheseweg über Phosphortrichlorid oder Phosphoroxychlorid als Phosphorquelle beschritten werden muß und bei dem chemisch und technisch aufwendige Reinigungsschritte vermieden werden.

Die erfindungsgemäß eingesetzten Phosphorsäureester entsprechen im wesentlichen denen, die als Zwischenstufe im Reaktionsablauf der Bildung einer intumeszierenden Schicht auftreten und deren Zersetzung zur Intumeszenz führt.

Intumeszierende Beschichtungen auf der Basis der erfindungsgemäßen Zusammensetzung weisen unter den der obigen Tabelle 1 zugrundeliegenden Bedingungen die in der folgenden Tabelle 2 wiedergegebenen Eigenschaften auf.

**TABELLE 2**

| Bestandteil | feuchte Beschichtung (%) | trockene Beschichtung (%) | intumesziertes Kohlenstoffgerüst (%) | unbrennbarer Rückstand (%) |
|---|---|---|---|---|
| Bindemittel | 60 | 60 | 49 | 37,5 |
| Pigment | 40 | 40 | 40 | 40 |
| Summe | 100 | 100 | 89 | 77,5 |

Aus Tabelle 2 ergibt sich, daß am Ende der Beflammung einer erfindungsgemäß erhältlichen Beschichtung noch 77,5% des Ausgangsmaterials vorhanden sind. Die Schutzwirkung ist also etwa dreimal so gut wie die eines konventionellen Systems.

Ein Gegenstand der vorliegenden Erfindung ist somit eine Zusammensetzung mit integrierten intumeszierenden Eigenschaften, die erhältlich ist durch Vereinigen von
(a) einem oder mehreren Amino-Formaldehydharzen und
(b) einer Mischung von gegebenenfalls mit Carbonsäureanhydrid modifizierten Mono- und Diestern von Orthophosphorsäure mit einem oder mehreren Polyolen, wobei der durchschnittliche Hydroxylgruppengehalt dieser Polyole mindestens 40 Gew.-% betragt, das Molverhältnis Monoester/Diester 12:1 nicht übersteigt und der Phosphorgehalt der Mischung wenigstens 10 Gew.-% beträgt.

Die obige Komponente (b) und deren Herstellung aus Polyphosphorsäure und den entsprechenden Polyolen bei erhöhter Temperatur und vermindertem Druck ist ebenfalls Gegenstand der Erfindung, ebenso wie die Verwendung der obigen Zusammensetzung für Beschichtungen, insbesondere von Gegenständen aus Holz, Kunststoffen, Cellulosematerialien, Gummi und Metall, sowie zur Imprägnierung von Textilien.

In den Zeichnungen zeigt
- Figur 1 die Abhängigkeit des in der Praxis erhaltenen Säurewerts vom Kondensationsgrad der Phosphorsäure bei der Veresterung von Polyphosphorsäure (2 Mol-Äquivalente H₃PO₄) mit einem Mol Glycerin und einem Mol Pentaerythrit (Reaktionstemperatur 115°C; Druck 160 mm Hg bzw. Vakuum 600 mm Hg); und
- Figur 2 die Abhängigkeit des in der Praxis erhaltenen Säurewerts vom Druck bei der der Figur 1 zugrundeliegenden Veresterung (Reaktionstemperatur 115°C).

Erfindungsgemäß bevorzugt ist es, wenn das Molverhältnis Monoester/Diester in der obigen Komponente (b) 6:1 und insbesondere 3:1 nicht übersteigt. Ein besonders bevorzugtes Molverhältnis Monoester/Diester liegt im Bereich von 2:1 bis 1:1.

Weiterhin wird es bevorzugt, daß es sich bei der Komponente (a) um ein gegebenenfalls modifiziertes Melamin-Formaldehydharz und/oder ein gegebenenfalls modifiziertes Harnstoff-Formaldehydharz handelt. Die Modifizierung kann dabei in einer herkömmlichen Modifizierung (z.B. Methylierung) bestehen. Bevorzugt werden die Harnstoff- und Melamin-Formaldehydharze aber mit aromatischen Glycidylethern und/oder cycloaliphatischen Epoxiden modifiziert. Konkrete Beispiele für derartige Modifizierungsmittel sind 3,4-Epoxycyclohexylmethyl-3,4-epoxycyclohexancarboxylat und Bisphenol-A-Diglycidylether. Diese Modifizierung erhöht die Festigkeit der gehärteten Zusammensetzung und führt im Brandfall zu einer besseren Haftung der intumeszierten Schicht. Vorzugsweise werden die oben genannten Modifizierungsmittel in einer solchen Menge eingesetzt, daß sie 1 bis 15 Gew.-% der Komponente (a) ausmachen.

Das Mengenverhältnis von Komponente (a) zu Komponente (b) richtet sich im wesentlichen nach dem gewünschten Phosphorgehalt der getrockneten und ausgehärteten Zusammensetzung. Vorzugsweise beträgt dieser Phosphorgehalt mindestens 8 und insbesondere mindestens 10 Gew.-%, während ein Phosphorgehalt von 16 Gew.-% in der Regel nicht überschritten wird. Wie bereits erwähnt, beträgt der minimale Phosphorgehalt in der Komponente (b) 10 Gew.-%, während ein bevorzugtes Maximum bei 25 Gew.-% liegt. Ein besonders bevorzugter Bereich ist 15 bzw. 22 Gew.-% Phosphor für die Komponente (b).

Weiterhin wird es bevorzugt, daß pro Mol Säurefunktion in der Komponente (b) etwa 1 Mol Methylolfunktion in der Komponente (a) zur Verfügung steht.

Die obige Komponente (b) leitet sich vorzugsweise von mindestens 2 und insbesondere von 2 bis 4 Polyolen ab. Der durchschnittliche Hydroxylgruppengehalt dieser Polyole (berechnet als Molekulargewicht der Hydroxylgruppen dividiert durch das Gesamtmolekulargewicht der Polyole mal 100%) beträgt mindestens 40 Gew.-% und vorzugsweise mindestens 45, insbesondere mindestens 47 Gew.-%. Dabei ist es jedoch nicht erforderlich, daß jedes einzelne Polyol in der Polyolmischung einen Hydroxylgruppengehalt von mindesten 40 Gew.-% aufweist. Vielmehr können in Polyolmischungen auch ein oder mehrere Polyole mit einem Hydroxylgruppengehalt unter 40 Gew.-% eingesetzt werden, wobei vorzugsweise nicht mehr als 15% aller vorhandenen Polyol-Hydroxylgruppen von derartigen Polyolen stammen. Selbstverständlich muß ein zu niedriger Hydroxylgruppengehalt (<40 Gew.-%) eines vornandenen Polyols durch die Anwesenheit von Polyolen mit einem entsprechend höheren Hydroxylgruppengehalt ausgeglichen werden.

Bevorzugte Beispiele für Polyole mit einem Hydroxylgruppengehalt von weniger als 40 Gew.-% sind z.B. aromatische Polyole wie Bisphenol-A und Hydroxylgruppen-haltige Polymere, insbesondere Styrol-Allylalkohol-Copolymere.

Selbst bei Anwesenheit von höhermolekularen Polyolen sollte jedoch gewährleistet sein, daß die Polyolmischung im Temperaturbereich von 100 bis 150°C (dem bevorzugten Temperaturbereich für die Herstellung der Komponente (b)) flüssig ist, obwohl dies nicht unbedingt erforderlich ist.

Erfindungsgemäß besonders bevorzugt eingesetzte Polyole sind solche mit 2 bis 12, insbesondere 2 bis 6 Kohlenstoffatomen. Konkrete Beispiele hierfür sind Glycerin, Trimethylolpropan, Pentaerythrit, Inosit, Ethandiol und Propandiol. Geeignete Verbindungen sind auch Zucker, insbesondere Mono- und Disaccharide.

Die obigen Phosphorsäureteilestermischungen können vorteilhaft mit aromatischen und/oder aliphatischen Carbonsäureanhydriden modifiziert werden. Diese Modifizierung führt zu einer verbesserten Wasserbeständigkeit der Beschichtung und zur Ausbildung einer stabileren intumeszierten Schicht bei Beflammung. Besonders geeignete Carbonsäureanhydride sind solche, die Kohlenstoffsechsringfragmente der Formel C₆R₄ bzw. C₆R₁₀ enthalten, worin die Reste R gleich oder verschieden sein können und für Wasserstoff, Halogen (insbesondere Fluor und Chlor) oder Methyl stehen. Konkrete Beispiele für derartige Carbonsäureanhydride sind Phthalsäureanhydrid und Cyclohexan-1,2-dicarbonsäureanhydrid sowie die teilweise oder vollständig fluorierten/chlorierten Derivate derselben. Bei der obigen Modifizierung wird das Carbonsäureanhydrid vorzugsweise in einer solchen Menge eingesetzt, daß es 10 bis 20 Gew.-% der Komponente (b) ausmacht. Besonders bevorzugt ist im Falle von Phthalsäureanhydrid ein Anteil von etwa 15 Gew.-%.

Im Hinblick auf die weiter unter beschriebene erfindungsgemäße Herstellung der Komponente (b) enthalten die erfindungsgemäßen Estermischungen bevorzugt auch hydroxylgruppenhaltige Polysiloxane und/oder oberflächenaktive Verbindungen (Tenside) bzw. Netzmittel, vorzugsweise Fluortenside, in üblichen Mengen. Polysiloxan und Tensid können auch in einer einzigen Verbindung zusammengefaßt sein. Diese Komponenten erleichtern die Entfernung des bei der unten beschriebenen Veresterungsreaktion gebildeten Kondensationswassers durch Bildung eines hydrophoben Milieus und Herabsetzung der Oberflächenspannung und führen im Fall der Polysiloxane beim gehärteten Endprodukt auch zu einer stabileren intumeszierenden Beschichtung, die besser auf dem Substrat haftet.

Jedes Hydroxylgruppen-haltige Polysiloxan, das im unten näher beschriebenen Veresterungs-Reaktionsmedium löslich oder dispergierbar ist und dessen Hydroxylgruppen mit Phosphorsäure reagieren können, kann eingesetzt werden. Der Gesamtgehalt des von derartigen Polysiloxanen herrührenden SiO₂ in der ausgehärteten Zusammensetzung sollte jedoch vorzugsweise 2 Gew.-% nicht überschreiten, da ansonsten die intumeszierende Beschichtung relativ starr wird. Konkrete Beispiele für bevorzugte Polysiloxane sind dihydroxyfunktionelle Methylsiloxane, z.B. Type LA 157 (Th. Goldschmidt). Feste Siloxantypen (z.B. Type Z 8018 von Dow Corning) können ebenfalls eingesetzt werden, wenn sehr kompakte Beschichtungsfilme mit geringer Intumeszenz erwünscht sind.

Prinzipiell können auch alle Tenside oder oberflächenaktiven Substanzen bzw. Netzmittel eingesetzt werden, die in der jeweiligen Reaktionsmischung ausreichend stabil sind und die Oberflächenspannung reduzieren. Dies trifft insbesondere auf fluorierte Phosphatester, z.B. Type Fluowet PP (Hoechst) zu. Diese Produkte werden vorteilhaft der zur Herstellung der Phosphatestermischung eingesetzten Polyphosphorsäure vor der Vereinigung mit dem Polyol zugesetzt. Nicht reaktive Fluortenside wie Fluorad 431 (3M) können ebenfalls eingesetzt werden.

Obgleich die erfindungsgemäßen Zusammensetzungen als solche zu Intumeszenz führen, kann es unter bestimmten Umständen von Vorteil sein, der Zusammensetzung zusätzliches Treibmittel zuzusetzen, z.B. um die Steiggeschwindigkeit der intumeszierten Schicht zu erhöhen und deren Dichte zu erniedrigen. Besonders geeignete Treibmittel, die in der Regel in einer Menge von bis zu 20 Gew.-%, bezogen auf die Estermischung, eingesetzt werden, sind stickstoffhaltige Treibmittel, insbesondere Harnstoff, Melamin und Derivate derselben.

Den erfindungsgemäßen Zusammensetzungen können auch übliche Füllstoffe und/oder Pigmente zugesetzt werden, wobei die Gesamtmenge derselben in der Regel 5 bis 50%, insbesondere 10 bis 40% des Gesamtgewichts der ausgehärteten Zusammensetzung ausmacht.

Als Füllstoffe und Pigmente eignen sich alle in herkömmlichen intumeszierenden Zusammensetzungen eingesetzten Substanzen, die vorzugsweise mineralischer (anorganischer) Natur sind. Beispiele hierfür sind Pigmente wie Titandioxid und Ruß, Silicate wie z.B. Aluminiumsilicat, und Mineralfasern, wie z.B. Asbest. Die Füllstoffe/Pigmente können der Komponente (a) und/ oder der Komponente (b) vor der Vereinigung dieser Komponenten oder danach zugegeben werden, vorzugsweise erfolgt die Zugabe jedoch vor der Vereinigung.

Die erfindungsgemäßen Zusammensetzungen liegen vorzugsweise in einer für Beschichtungs- bzw. Imprägnierungszwecke geeigneten Form vor, d.h. z.B. in wäßriger bzw. wasserhaltiger Lösung oder Dispersion. Der Wassergehalt der Zusammensetzung richtet sich nach Menge und Natur der eingesetzten Komponenten, liegt vorzugsweise jedoch nicht höher als 60 Gew.-% der gesamten Zusammensetzung einschließlich Wasser. Der Wassergehalt der Komponente (a) vor der Vereinigung mit Komponente (b) liegt je nach Anwendungszweck vorzugsweise im Bereich von 20 bis 40 Gew.-%, während der Wassergehalt der Komponente (b) vorzugsweise im Bereich von 25 bis 90 Gew.-% liegt.

Die erfindungsgemäßen Zusammensetzungen werden vorzugsweise zur Beschichtung von Gegenständen aus Holz, Kunststoffen (einschließlich Kunststoff-Kompositen und Kunststoffschäumen), Cellulosematerialien, Gummi und Metall und zur Imprägnierung von Textilien eingesetzt. Das Aufbringen der Zusammensetzung kann auf jede herkömmliche Art und Weise erfolgen, z.B. durch Sprühen, Tauchen, Ziehen und Streichen. Gegebenenfalls kann der Beschichtungsvorgang mehrmals wiederholt werden. Die Beschichtungsdicken können in weitem Rahmen variiert werden, abhängig von der Viskosität der Zusammensetzung und dem zu beschichtenden Substrat. Übliche Schichtdicken liegen im Bereich von 10 µm bis 3 mm.

Die Härtung der Zusammensetzung (des Überzugs) erfolgt vorzugsweise bei Raumtemperatur, wenngleich in Abhängigkeit von der Natur der eingesetzten Komponenten auch eine Härtung bei erhöhten Temperaturen (vorzugsweise bis zu etwa 60°C) erfolgen kann.

Die als Komponente (b) für die Herstellung der erfindungsgemäßen Zusammensetzung eingesetzte Estermischung kann erfindungsgemäß nach einem Verfahren hergestellt werden, bei dem man von Polyphosphorsäuren (gegebenenfalls in Mischung mit P₂O₅) ausgeht, die bei erhöhter Temperatur und vermindertem Druck unter effektiver Entfernung des bei der Veresterung gebildeten Wassers (vorzugsweise unter starkem Rühren) mit dem bzw. den Polyolen im zur Erreichung des erforderlichen Monoester/Diester-Verhältnisses geeigneten Molverhältnis umgesetzt werden.

Ein bevorzugtes Verfahren zur Herstellung der Phosphorsäureteilestermischung (b) läßt sich wie folgt zusammenfassen:
1. In einem vakuumdichten Rührgefäß aus inerten Materialien, das mit einer regelbaren Heizeinreichtung versehen ist, wird eine Polyolmischung, die im Temperaturbereich von 100 bis 150°C flüssig ist und über einen durchschnittlichen Hydroxylgruppengehalt von mindestens 40 Gew.-% verfügt, vorgelegt.
2. Zu dieser Polyolmischung wird unter vermindertem Druck (vorzugsweise höchstens 160 mm Hg), starkem Rühren und Temperaturkontrolle Polyphosphorsäure so langsam zugegeben, daß ein lokaler Säureüberschuß vermieden wird und der Anteil freier, nicht veresterter Säure im Ansatz relativ niedrig bleibt.
3. Nach Zugabe der gesamten Polyphosphorsäure wird unter konstantem Vakuum und bei konstanter Temperatur weitergerührt, bis die Säurezahl des Ansatzes einen konstanten Wert annimmt.

Das so erhaltene Reaktionsprodukt ist eine viskose, mehr oder weniger gefärbte Masse. Dieses sogenannte Präpolymere kann in dieser Form weiterverwendet oder, falls erforderlich oder gewünscht, z.B. durch die Behandlung in einem Dünnschichtverdampfer weiter gereinigt werden, wobei eine weitere Veresterung durch Wasseraustritt erfolgt.

Eine weitere Reinigungsmethode ist die azeotrope Entwässerung. Das Präpolymer wird dabei in einem zur Azeotropbildung mit Wasser geeigneten Lösungsmittel, vorzugsweise Methylisobutylketon, gelöst. Die Lösung wird am Rückfluß gekocht und das Redestillat wird über ein geeignetes Trockenmittel in den Destillationskolben zurückgeführt.

Der für die erfolgreiche Durchführung der obigen Reaktion wichtigste Faktor ist die möglichst frühzeitige und effektive Entfernung des bei der Veresterungsreaktion gebildeten Wassers, da ansonsten aus der Polyphosphorsäure unter Hydrolyse bevorzugt Orthophosphorsäure entsteht, die unter den beschriebenen Reaktionsbedingungen nur schwer zu verestern ist und die Zersetzung (Hydrolyse) bereits gebildeter Ester katalysiert.

Die bevorzugte Reaktionstemperatur für die obige Reaktion liegt im Bereich von 115 bis 130°C, während der verminderte Druck vorzugsweise 70 mbar oder weniger beträgt. Wie bereits oben erwähnt, wird die Umsetzung vorzugsweise in Anwesenheit von Polysiloxanen und/oder Tensiden durchgeführt, die die Entfernung des gebildeten Kondensationswassers aus dem Reaktionsgemisch durch Bildung eines hydrophoben Milieus und Herabsetzung der Oberflächenspannung erleichtern.

Die in der obigen Umsetzung verwendbaren Polyphosphorsäuren können einen beliebigen Kondensationsgrad aufweisen, vorausgesetzt sie liegen in flüssiger oder fein verteilter, unter den beschriebenen Reaktionsbedingungen gut dispergierbarer Form vor. Für die Berechnung der Ansatzmenge ist davon auszugehen, daß Pyrophosphorsäure 105% Orthophosphorsäure und Tetraphosphorsäure 117,5% Orthophosphorsäure entsprechen. Phosphorpentoxid entspricht 138% Orthophosphorsäure.

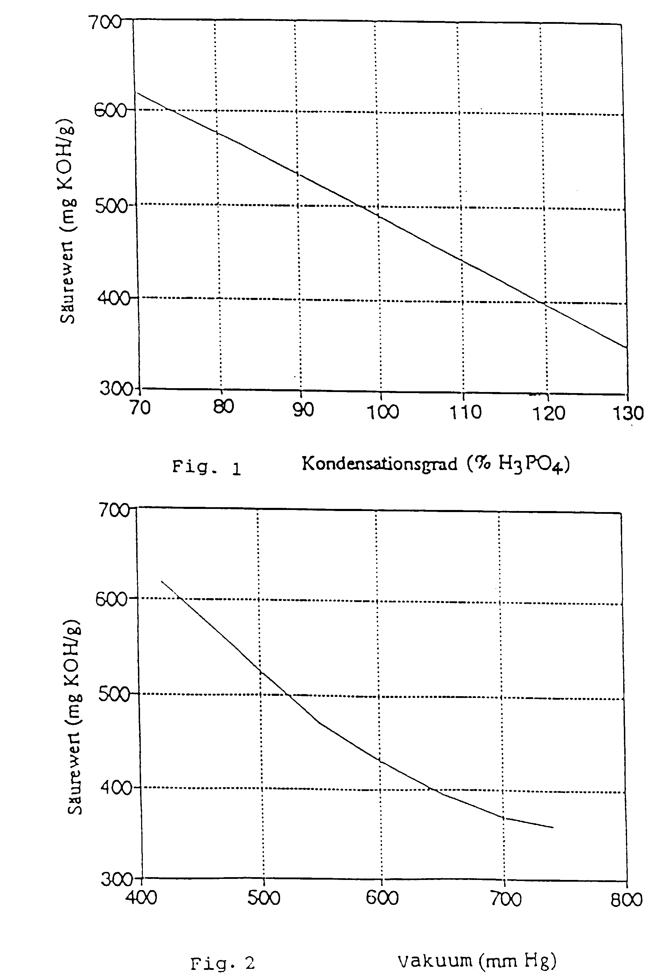

Die erreichbare Säurezahl hängt vom Kondensationsgrad der eingesetzten Polyphosphorsäure ab. Für die Umsetzung von zwei Mol-Äquivalenten Orthophosphorsäure in Form von Polyphosphorsäure, einem Mol-Äquivalent Pentaerythrit und einem Mol-Äquivalent Glycerin ist die erreichbare Säurezahl in Abhängigkeit vom Kondensationsgrad der eingesetzten Polyphosphorsäure in Figur 1 wiedergegeben.

Erfindungsgemäß wurde auch gefunden, daß nur maximal 50% der benötigten Phosphorsäure aus Phosphorpentoxid stammen dürfen, da es sonst zu Zersetzungsreaktionen kommt. Es ist zwar bekannt, daß Triester der Orthophosphorsäure direkt durch Umsetzung von Phosphorpentoxid mit mono- und difunktionellen Alkoholen erhalten werden können, mit carbonifizierenden Polyolen, die wie oben beschrieben durch ihren Hydroxylgruppengehalt gekennzeichnet sind, läuft die Reaktion jedoch unter Dehydratisierung bis zur Kohlenstoffbildung weiter.

Der Endwert der Säurezahl unter den gegebenen Bedingungen hängt auch von der Höhe des Vakuums ab, wie dies in Figur 2 gezeigt ist. Es ist wichtig, daß das gesamte Reaktionsgemisch dem Vakuum ausgesetzt wird. Vorteilhaft sind effektives Rühren und gute Durchmischung, damit die Reaktionsmischung mit einer großen und sich ständig erneuernden Oberfläche dem Vakuum ausgesetzt wird.

Die in den unten angegebenen Beispielen beschriebenen Ansätze können über den Endpunkt der Reaktion hinaus erhitzt werden, wobei allerdings der Anteil der Zersetzungsprodukte steigt.

Der Reaktionsverlauf kann anhand der Säurezahl verfolgt werden. Da jede eingesetzte Polyphosphorsäure zu Orthophosphorsäure hydrolysiert wird, kann der Verlauf der Reaktion durch die Bestimmung der Säurezahl und der Zahl der veresterten Säurefunktionen der Orthophosphorsäure überwacht werden.

Die Säurezahl kann durch Titration gegen Kaliumhydroxid bestimmt werden. Die erste Säurefunktion reagiert in allen Fällen zum Ester ab. Der Veresterungsgrad der Phosphorsäure kann über das Verhältnis von erster zu zweiter Säurefunktion definiert werden. Titriert man Orthophosphorsäure gegen starke Basen wie Kalilauge, wird pro neutralisierter Säurefunktion je ein Wendepunkt in der Titrationskurve bei drei diskreten pH-Werten erhalten. Diese Werte liegen bei pH 4,5, 9,0 und 13,0.

Werden Säurefunktionen verestert, so steigt der saure Charakter der verbleibenden Säurereste. So zeigt ein Monoester Äquivalenzpunktwerte bei pH 4,5 bzw. 9,0, während ein Diester einen Endpunkt bei pH 4,5 aufweist.

Titriert man eine Mischung von Mono- und Diestern der Orthophosphorsäure, so kann das Verhältnis Monoester/Diester aus der Lage des Äquivalenzpunktes bei pH 9,0 bestimmt werden. Ein Monoester trägt zu beiden Äquivalenzpunkten (pH 4,5 und 9,0) jeweils 50% bei. Die Äquivalenzmenge bis zum ersten Umschlagpunkt wird also die Hälfte des Gesamtverbrauchs bis zum zweiten Umschlagpunkt ausmachen. Erfindungsgemäß sind solche Phosphorsäureteilestermischungen einsetzbar, bei denen bis zum ersten Umschlagpunkt mehr als 52% des Gesamtverbrauchs (bis zum zweiten Umschlagpunkt) ermittelt werden (d.h. das Molverhältnis Monoester/Diester 12:1 nicht übersteigt). Bei tieferen Werten sind die resultierenden Beschichtungen hygroskopisch und klebrig, aber wasserlöslich.

Die Säurezahl und das Verhältnis Monoester/Diester dienen damit zur Bestimmung des Reaktionsverlaufs und der Effizienz des Herstellungsverfahrens hinsichtlich der gewünschten Endprodukte. Ein besonders bevorzugtes Molverhältnis Monoester/ Diester beträgt 1:1, was gleichbedeutend damit ist, daß bei der Titration 67% des Gesamtverbrauchs auf den ersten Endpunkt der Titration entfallen.

Die Zersetzung, die von Farbveränderungen des Produkts begleitet wird, ist gekennzeichnet durch einen Abfall des Verhältnisses von erster zu zweiter Säurefunktion von einem Maximum für das gegebene Synthesesystem auf 50%.

Da der Höchstwert des Diester/Monoester-Verhältnisses, der erreicht werden kann, 2:1 beträgt, stehen zur Erreichung dieses Höchstwertes weitere Reinigungsverfahren zur Verfügung, z.B. umlaufende Dünnschichtverdampfung im Vakuum. Dieser Prozeß kann solange durchgeführt werden, bis die physikalischen Eigenschaften, insbesondere die Viskosität, des Präpolymeren eine weitere Dünnschichtverdampfung ausschließen.

Bildet sich bei der Reaktionstemperatur mit den gewählten Polyolen, z.B. Styrol-Allylalkohol-Copolymeren, kein flüssiges Reaktionsgemisch, so können die obigen Präpolymeren durch azeotrope Entwässerung hergestellt werden. Wie bereits oben erwähnt, eignet sich dieses Verfahren auch zur Absenkung der Säurezahl von anderen Präpolymeren.

Die folgenden Beispiele veranschaulichen die vorliegende Erfindung, ohne deren Umfang jedoch zu beschränken.

### BEISPIEL 1

Dieses Beispiel veranschaulicht eine einfache Herstellung einer Zusammensetzung mit integrierten intumeszierenden Eigenschaften.

In einen 1 Liter-Rundkolben, der mit einem Ankerrührer, einer Vakuumleitung (erreichbarer reduzierter Druck 160 mm Hg oder darunter), einem Heizmantel mit Temperaturkontrolle, einem Tropftrichter und einem Pulvertrichter versehen ist, werden über den Pulvertrichter 184 g Glycerin eingefüllt. Die Heizung wird auf 140°C eingestellt. Zu dem heißen, langsam gerührten Glycerin werden 272 g Pentaerythrit gegeben. Bei ca. 145°C und unter Vakuum wird dem Polyolgemisch ca. 0,5 Stunden lang darin enthaltenes Wasser entzogen. Nach Abkühlen auf 115°C und Einstellen der Solltemperatur auf diesen Wert werden bei hoher Rührgeschwindigkeit (ca. 1000 Upm) 338 g handelsübliche Tetraphosphorsäure zugegeben und zwar mit solcher Geschwindigkeit, daß die Temperatur im Reaktor 115°C nicht übersteigt. Nach Zugabe der gesamten Tetraphosphorsäure wird die Reaktionsmischung weitere 4 Stunden bei 115°C und unter Vakuum gehalten. Der Reaktionsverlauf wird durch Bestimmung der Säurezahl verfolgt, die am Ende der Reaktion auf einen konstanten Wert von etwa 440 mg KOH/g abgefallen ist.

Man entleert den Kolben und läßt den Inhalt auf etwa 100°C abkühlen.

### Herstellung intumeszierender Beschichtungen

Das oben erhaltene Produkt wird mit Wasser zu einer 50 %-igen Lösung formuliert. Zu 100 g dieser Lösung werden 32,5 g Harnstoff-Formaldehydharzlösung (Type BT 970, hergestellt von British Industrial Plastics) gegeben. Die resultierende Mischung wird auf Holz aufgetragen und ergibt nach Aushärtung bei Raumtemperatur für ca. 24 Stunden einen Klarlack mit guter Haftung. Die Aushärtung kann auch bei einer Temperatur von maximal 60°C erfolgen. Die Topfzeit der Zusammensetzung beträgt maximal 25 Minuten. Die Mischung kann z.B. mit einem Pinsel aufgetragen oder aufgesprüht werden. Oberhalb 120°C bildet die Beschichtung eine intumeszierende Schutzschicht ohne die Bildung von Rauchgasen.

### Imprägnierung von Textilien

Aus dem oben erhaltenen Produkt wird mit Wasser eine 25%-ige Lösung hergestellt. 100 g dieser Lösung werden mit 16,25 g des obigen Harnstoff-Formaldehydharzes gemischt. Ein Textilgewebe wird für 5 Minuten in diese Lösung getaucht und anschließend aus der Lösung genommen. Der Überschuß an Lösung wird mittels einer Gummiwalze abgequetscht. Nach 30 Minuten bei ca. 60°C ist die Beschichtung ausgehärtet. Das so behandelte Textilgewebe zeigt eine etwas höhere Griffigkeit, hat aber durchaus noch textilen Charakter. Derart ausgerüstete Textilien sind flammfest, auch wenn die Intumeszenz nicht deutlich zu beobachten ist. Die gute Isolierwirkung läßt sich aber bei Beflammung durch Verfolgen der Temperatur auf der Rückseite des geschichteten Materials feststellen.

### BEISPIEL 2

Dieses Beispiel veranschaulicht die Verwendung von fluorierten Tensiden, die Polysiloxan-Modifikation, die teilweise Verwendung von Phosphorpentoxid im Syntheseverfahren und die Epoxidmodifikation des Amino-Formaldehydharzes.

In das in Beispiel 1 beschriebene Reaktionsgefäß werden 184 g Glycerin, 272 g Pentaerythrit und 60 g fluoriertes Tensid (Fluorad FC 405, nergestellt von 3M) gegeben. Bei dem fluorierten Tensid handelt es sich um ein Fluor-modifiziertes Hydroxylgruppen-haltiges Polysiloxan in Form einer 2%-igen ethanolischen Lösung. Das Ethanol wird durch Anlegen des Vakuums vor Beginn der Reaktion abgezogen. (Das Hydroxylgruppen-haltige Polysiloxan und das Fluortensid müssen nicht notwendigerweise in Form einer einzigen Verbindung vorliegen.)

Es werden 169 g Tetraphosphorsäure unter den gleichen Bedingungen wie in Beispiel 1 zugegeben. Sobald die Zugabe der Tetraphosphorsäure beendet ist, wird die Temperatur der Mischung auf 100°C abgesenkt, worauf 105 g Phosphorpentoxid so langsam zugegeben werden, daß die Temperatur der Mischung nicht über 115°C steigt. Nach Zugabe des gesamten Phosphorpentoxids wird die Reaktionsmischung so lange bei 115°C unter Vakuum gehalten, bis die Säurezahl auf einen konstanten Wert unter 380 mg KOH/g gefallen ist.

Zur weiteren Verarbeitung wird das Reaktionsprodukt dann in eine 50%-ige wäßrige Lösung überführt.

Außerdem werden zu einer 60%-igen wäßrigen Lösung eines handelsüblichen Melamin-Formaldehydharzes (Type BT 427; British Industrial Plastics) 20% eines cycloaliphatischen Epoxids (3,4 Epoxycyclohexylmethyl-3,4-epoxycyclohexancarboxylat, im Handel erhältlich unter der Bezeichnung ERL 4221 von Union Carbide Corporation) zugegeben. 39 g der so hergestellten Harzlösung werden mit 100 g der obigen wäßrigen Präpolymerlösung gemischt. Mit dieser Mischung können Holz und grundierte Metallplatten beschichtet werden. Die Topfzeit beträgt ca. 30 Minuten. Nach Aushärten an der Luft bei Raumtemperatur oder bei maximal 60°C bildet sich ein harter, nicht klebender wasserunlöslicher Klarlack mit intumeszierenden Eigenschaften. In größerer Verdünnung kann diese Formulierung auch für die flammfeste Ausrüstung textiler Materialien nach dem in Beispiel 1 beschriebenen Verfahren verwendet werden, wobei das Gewebe seinen textilen Charakter beibehält.

### BEISPIEL 3

In die oben beschriebene Apparatur werden 124 g Ethandiol, 272 g Pentaerythrit, 0,5 g Fluorad FC 481 (3M) und 10 g LA 157 (Th. Goldschmidt) gegeben.

Fluorad FC 481 ist ein fluoriertes Tensid, während LA 157 ein hydroxyfunktionelles Polysiloxan darstellt.

Zur obigen Mischung werden langsam und unter Rühren 335 g Tetraphosphorsäure zugegeben, wobei die Temperatur der Reaktionsmischung 100°C nicht übersteigt. Nach Zugabe der gesamten Säuremenge wird solange die Temperatur auf 115°C angehoben und die Reaktionsmischung wird bei dieser Temperatur solange unter Vakuum gehalten, bis die Säurezahl einen konstanten Wert unter 494 mg KOH/g erreicht hat.

Aus dem so erhaltenen Präpolymer wird eine 50%-ige wäßrige Lösung hergestellt.

Weiter wird aus einem Melamin-Formaldehydharz (Type BT 427, British Industrial Plastics) eine 60%-ige Lösung hergestellt. Diese Lösung wird auf dieselbe Weise wie in Beispiel 2 mit cycloaliphatischem Epoxid modifiziert.

Zu 100 g der oben hergestellten wäßrigen Lösung des Präpolymeren werden 45 g modifizierte Harzlösung gegeben. Mit dieser Mischung können Holz oder grundierte Metallplatten beschichtet werden. Die Topfzeit beträgt ca. 30 Minuten. Nach Aushärten der Beschichtung an der Luft bei Raumtemperatur oder bei maximal 60°C wird ein harter, nicht klebender wasserunlöslicher Klarlack erhalten. Die so erhaltene Beschichtung wirkt im Falle einer Brandbelastung als intumeszierender Lack, der das Substrat schützt.

Für die Beschichtung von Stahlkonstruktionen kann folgende Formulierung Verwendung finden:

| **Zusammensetzung A** | |
|---|---|
| Präpolymer wie oben hergestellt | 50 g |
| Wasser | 47 g |
| Titandioxid (Rutil-Typ) | 3 g |

| **Zusammensetzung B** | |
|---|---|
| Harz (BT 427) | 19 g |
| Epoxid (ERL 4221) | 9 g |
| Wasser | 11 g |
| Aluminiumsilikat (Ketjensil SM 405; Akzo) | 9 g |
| Mineralfasern | 2 g |

Zwei Teile der Zusammensetzung A werden mit einem Teil der Zusammensetzung B gemischt. Mit diesem Material kann grundierter Stahl (Platten oder Träger) mit einer intumeszierenden Beschichtung von bis zu 2 mm Schichtdicke versehen werden. Diese Beschichtung härtet über Nacht bei Raumtemperatur vollständig aus.

Unterwirft man auf diese Weise beschichtete Muster einem Brandversuch mit einer Temperaturkurve nach BS 476, Teil 20, so findet man bezüglich der Temperaturerhöhung des Substrats im Vergleich zu einem konventionellen phosphatkatalysierten System bei gleicher Trockenfilmdicke deutlich bessere Werte.

Die nach dem obigen Verfahren erhaltene Beschichtung ist hart, flexibel und glänzend sowie beständig gegen Wasser und Feuchtigkeit. Derartige Beschichtungen können auch auf Holz in Trockenfilmdicken von 50 bis 60 µm aufgebracht werden, wobei eine harte, glänzende, dekorative Schutzschicht erhalten wird.

### BEISPIEL 4

Dieses Beispiel erläutert die Modifizierung der Phosphorsäureteilestermischung mit Carbonsäureanhydrid.

Die in Beispiel 1 beschriebene Apparatur wird so modifiziert, daß eine Rückflußdestillation möglich ist. Außerdem wird eine Möglichkeit zur Probennahme des Kondensats vorgesehen. Die Vakuumleitung sollte am Kühler angeschlossen sein.

Der Reaktor wird mit 87 g Ethandiol, 76 g 1,3-Propandiol, 82 g Pentaerythrit und 90 g 1,4-Butandiol beschickt. Unter geringem Unterdruck (800 mbar) werden 335 g Tetraphosphorsäure langsam zugegeben. Ist alle Säure zugegeben, wird auf 130°C erhitzt und der Druck derart erniedrigt, daß das Reaktionsgemisch gerade am Rückfluß siedet. Der Siedepunkt des Ansatzes steigt dabei langsam an. Siedet das Reaktionsgemisch bei 130°C und etwa 200 mbar, findet man im Kondensat nur Wasser, das einfache durch Messung der Dichte oder des Brechungsindexes identifiziert werden kann. Die Apparatur wird dann wieder in die in Beispiel 1 beschriebene Form gebracht. Sobald bei der oben beschriebenen Titration 60 bis 62% des Gesamtverbrauchs an Lauge auf den ersten Endpunkt entfallen, werden zum Reaktionsgemisch 133 g Phthalsäureanhydrid gegeben. Nachdem sich das Phthalsäureanhydrid gelöst hat, fährt man mit der Vakuumdestillation wie beschrieben fort, bis das Verhältnis der Endpunkte der Titration um nicht mehr als 1% höher ist als vor der Zugabe des Phthalsäureanhydrids. Dieser mit aromatischen Gruppen modifizierte Phosphorsäureteilester kann für die Herstellung intumeszierender Beschichtungen von Stahl verwendet werden, indem er wie in Beispiel 1 beschrieben mit Melamin-Formaldehydharz umgesetzt wird. In diesem Fall kann auf die Epoxid-Modifizierung des Melamin-Formaldehydharzes verzichtet werden. Die gehärtete Beschichtung zeigt eine deutlich verbesserte Beständigkeit gegenüber Feuchtigkeit und wird bei Beflammung zu einer starren intumeszierten Schicht.

### BEISPIEL 5

Man stellt nach dem Verfahren von Beispiel 1 ein Präpolymer her, wobei das Molverhältnis Orthophosphorsäure:Glycerin:Pentaerythrit 2:0,75:0,75 beträgt.

Auf einen 500 ml-Rundkolben wird eine Soxhlet-Apparatur aufgesetzt. Es wird ein Rührer, vorzugsweise ein Ankerrührer, benutzt, der den Kolbeninhalt in ständiger Bewegung hält und an den Kolbenwandungen hochdrückt. Der Kolben wird beheizt. In die Soxhlet-Apparatur wird ein Trockenmittel gegeben und es wird ein Kühler angeschlossen. In dem Kolben werden 280 g des obigen Präpolymeren vorgelegt, worauf 140 g Styrol-Allylalkohol-Harz (Monsanto RJ 100), gelöst in 140 g Methylisobutylketon (MIBK), zugegeben werden. Man startet den Rührer und kocht die Mischung 4 Stunden lang am Rückfluß, wobei das MIBK zwecks Entwässerung das Trockenmittel passiert.

Daraufhin entfernt man die Soxhlet-Apparatur und den Kühler und ersetzt diese durch eine Vakuumdestillationsapparatur. Man destilliert das MIBK so ab, daß die Temperatur des Präpolymeren dabei 115°C nicht übersteigt. Als Endprodukt erhält man ein wasserlösliches, weiches, schwach rosa gefärbtes Produkt. Dieses Produkt bildet mit Harnstoff- und Melamin-Formaldehydharzen, wie in den obigen Beispielen beschrieben, klare, harte Beschichtungen. Diese Beschichtungen intumeszieren weit weniger als die Beschichtungen, die in den vorhergehenden Beispielen beschrieben wurden, sind aber ebenfalls nicht entflammbar und entwickeln keine Rauchgase. Sie können für Klarlacke und Beschichtungen für z.B. Holz verwendet werden.

Das soeben beschriebene Verfahren kann als Alternative zum oben beschriebenen Reinigungsverfahren mit einer Kolonne auch zur Absenkung des Säurewertes im Dünnschichtverdampfer verwendet werden.

## Patentansprüche

1. Zusammensetzung mit integrierten intumeszierenden Eigenschaften, dadurch gekennzeichnet, daß sie erhältlich ist durch Vereinigen von
(a) einem oder mehreren Amino-Formaldehydharzen und
(b) einer Mischung von gegebenenfalls mit Carbonsäureanhydrid modifizierten Mono- und Diestern von Orthophosphorsäure mit einem oder mehreren Polyolen, wobei der durchschnittliche Hydroxylgruppengehalt dieser Polyole mindestens 40 Gew.-% beträgt, das Molverhältnis Monoester/Diester 12:1 nicht übersteigt und der Phosphorgehalt der Mischung wenigstens 10 Gew.-% beträgt.

2. Zusammensetzung nach Anspruch 1, dadurch gekennzeichnet, daß die Komponente (a) aus gegebenenfalls modifiziertem Melamin-Formaldehydharz, gegebenenfalls modifiziertem Harnstoff-Formaldehydharz und Mischungen davon ausgewählt ist.

3. Zusammensetzung nach Anspruch 1, dadurch gekennzeichnet, daß ihr Phosphorgehalt nach der Aushärtung mindestens 8 Gew.-% beträgt.

4. Zusammensetzung nach Anspruch 1, dadurch gekennzeichnet, daß sie in Form einer wäßrigen bzw. wasserhaltigen Lösung oder Dispersion vorliegt.

5. Zusammensetzung nach Anspruch 1, dadurch gekennzeichnet, daß die Komponente (b) von mindestens zwei Polyolen abgeleitet ist.

6. Zusammensetzung nach Anspruch 5, dadurch gekennzeichnet, daß jedes Polyol einen Hydroxylgruppengehalt von mindestens 40 Gew.-% aufweist oder ein oder mehrere Polyole einen Hydroxylgruppengehalt von unter 40 Gew.-% aufweisen und nicht mehr als 15% aller Polyol-Hydroxylgruppen von derartigen Polyolen stammen.

7. Zusammensetzung nach Anspruch 1, dadurch gekennzeichnet, daß die Polyole aus aliphatischen und cycloaliphatischen Polyolen mit 2 bis 12, vorzugsweise 2 bis 6, Kohlenstoffatomen ausgewählt sind.

8. Zusammensetzung nach Anspruch 7, dadurch gekennzeichnet, daß die Polyole aus Glycerin, Trimethylolpropan, Pentaerythrit, Inosit, Ethandiol, Propandiol und Mischungen davon ausgewählt sind.

9. Zusammensetzung nach Anspruch 7, dadurch gekennzeichnet, daß zusätzlich Hydroxylgruppen-haltige Polymere und/oder aromatische Polyole als Polyole eingesetzt werden.

10. Zusammensetzung nach Anspruch 1, dadurch gekennzeichnet, daß die Komponente (b) in mit aromatischen und/oder alicyclischen Carbonsäureanhydriden modifizierter Form vorliegt, wobei die Carbonsäureanhydride vorzugsweise Kohlenstoffsechsringfragmente der Formel C₆R₄ bzw. C₆R₁₀ enthalten, worin die Reste R gleich oder verschieden sein können und für Wasserstoff, Halogen oder Methyl stehen.

11. Zusammensetzung nach Anspruch 1, dadurch gekennzeichnet, daß sie zusätzlich stickstoffhaltige Treibmittel enthält, die vorzugsweise aus Harnstoff, Melamin, Derivaten dieser Verbindungen und Mischungen davon ausgewählt sind.

12. Zusammensetzung nach Anspruch 1, dadurch gekennzeichnet, daß sie zusätzlich Hydroxylgruppen-haltige Polysiloxane und/oder Fluortenside enthält, wobei die Polysiloxane vorzugsweise in einer solchen Menge vorliegen, daß der davon herrührende SiO₂-Gehalt der getrockneten und gehärteten Zusammensetzung nicht über 2 Gew.-% liegt.

13. Zusammensetzung nach Anspruch 2, dadurch gekennzeichnet, daß die Harze (a) mit aromatischen Glycidylethern und/oder cycloaliphatischen Epoxiden modifiziert sind.

14. Zusammensetzung nach Anspruch 1, dadurch gekennzeichnet, daß sie zusätzlich Füllstoffe und/oder Pigmente enthält, wobei die Füllstoffe und/oder Pigmente vorzugsweise aus mineralischen Stoffen ausgewählt sind.

15. Verwendung der Zusammensetzung nach Anspruch 1 zur Herstellung von Beschichtungen, insbesondere zur Beschichtung von Gegenständen aus Holz, Kunststoffen, Cellulosematerialien, Gummi und Metall sowie zur Imprägnierung von Textilien.

16. Mischung von Phosphorsäureteilestern, dadurch gekennzeichnet, daß es sich um eine gegebenenfalls mit Carbonsäureanhydriden modifizierte Mischung von Mono- und Diestern von Orthophosphorsäure mit einem oder mehreren Polyolen handelt wie sie in irgendeinem der Ansprüche 1 und 5 bis 12 definiert ist.

17. Verwendung der Mischung nach Anspruch 16 zur Herstellung von Beschichtungszusammensetzungen mit integrierten intumeszierenden Eigenschaften.

18. Verfahren zur Herstellung der Mischung nach Anspruch 16, dadurch gekennzeichnet, daß es die Umsetzung von Polyphosphorsäure mit dem oder den Polyolen bei erhöhter Temperatur und vermindertem Druck umfaßt.

19. Verfahren nach Anspruch 18, dadurch gekennzeichnet, daß die Umsetzung bei einer Temperatur von 100 bis 150°C durchgeführt wird.

20. Verfahren nach Anspruch 18, dadurch gekennzeichnet, daß die Umsetzung bei einem Druck von 160 mm Hg oder darunter durchgeführt wird.

21. Beschichtete Materialien, dadurch gekennzeichnet, daß die Beschichtung eine gehärtete Zusammensetzung nach Anspruch 1 umfaßt.

## Claims

1. A composition having integrated intumescent properties, characterized in that it is obtainable by combining
(a) one or more amino-formaldehyde resins and
(b) a mixture of optionally carboxylic acid anhydride-modified mono- and diesters of orthophosphoric acid with one or more polyols, the average hydroxyl group content of said polyols being at least 40 % by weight, the molar ratio monoester/diester not exceeding 12:1 and the phosphorus content of said mixture being at least 10 % by weight.

2. The composition according to claim 1, characterized in that component (a) is selected from optionally modified melamineformaldehyde resin, optionally modified urea-formaldehyde resin and mixtures thereof.

3. The composition according to claim 1, characterized in that the phosphorus content thereof after curing is at least 8 % by weight.

4. The composition according to claim 1, characterized in that it is present as an aqueous or water-containing, respectively, solution or dispersion.

5. The composition according to claim 1, characterized in that the component (b) is derived from at least two polyols.

6. The composition according to claim 5, characterized in that each polyol has a hydroxyl group content of at least 40 % by weight; or one or more polyols have a hydroxyl group content of less than 40 % by weight, and not more than 15 % of all polyol-hydroxyl groups are derived from such polyols.

7. The composition according to claim 1, characterized in that the polyols are selected from aliphatic and cycloaliphatic polyols having 2 to 12 carbon atoms, preferably 2 to 6 carbon atoms.

8. The composition according to claim 7, characterized in that the polyols are selected from glycerol, trimethylol propane, pentaerythritol, inositol, ethane diol, propane diol and mixtures thereof.

9. The composition according to claim 7, characterized in that hydroxyl group-containing polymers and/or aromatic polyols are additionally employed as polyols.

10. The composition according to claim 1, characterized in that component (b) has been modified with aromatic and/or aliphatic carboxylic acid anhydrides, said carboxylic acid anhydrides preferably containing carbon 6-ring fragments of formula C₆R₄ and C₆R₁₀, respectively, wherein the groups R may be the same or different and represent hydrogen, halogen or methyl.

11. The composition according to claim 1, characterized in that it additionally contains nitrogen-containing expanding agents, which are preferably selected from urea, melamine, derivatives of said compounds and mixtures thereof.

12. The composition according to claim 1, characterized in that it additionally contains hydroxyl group-containing polysiloxanes and/or fluorinated tensides, said polysiloxanes being preferably present in an amount such that the SiO₂ content of the dried and cured composition resulting therefrom does not exceed 2 % by weight.

13. The composition according to claim 2, characterized in that the resins (a) are modified with aromatic glycidyl ethers and/or cycloaliphatic epoxides.

14. The composition according to claim 1, characterized in that it additionally contains fillers and/or pigments, said fillers and/or pigments being preferably selected from mineral substances.

15. Use of the composition according to claim 1 for the production of coatings, in particular for the coating of articles made of wood, plastics, cellulosic materials, rubber and metal and for the impregnation of textile materials.

16. A mixture of partial phosphoric acid esters, characterized in that said mixture is a mixture of mono- and diesters of orthophosphoric acid with one or more polyols, optionally modified with carboxylic acid anhydrides, said mixture being defined in any one of the claims 1 and 5 to 12.

17. Use of the mixture according to claim 16 for the production of coating compositions having integrated intumescent properties.

18. A process for the production of the mixture according to claim 16, characterized in that it comprises the reaction of polyphosphoric acid with the polyol(s) at elevated temperature and reduced pressure.

19. The process according to claim 18, characterized in that the reaction is carried out at a temperature of from 100 to 150 °C.

20. The process according to claim 18, characterized in that the reaction is carried out at a pressure of 160 mm Hg or less.

21. Coated materials, characterized in that the coating comprises a cured composition according to claim 1.

## Revendications

1. Composition ayant des propriétés d'intumescence intégrées, caractérisée en ce qu'elle peut être obtenue par combinaison de
(a) une ou plusieurs résines amine-formaldéhyde et
(b) un mélange de mono- et diesters d'acide orthophosphorique avec un ou plusieurs polyols, éventuellement modifiés avec un anhydride d'acide carboxylique, dans lequel la teneur moyenne en groupes hydroxy de ces polyols est d'au moins 40 % en masse, le rapport molaire des monoesters aux diesters n'est pas supérieur à 12:1 et la teneur en phosphore du mélange est d'au moins 10 % en masse.

2. Composition selon la revendication 1, caractérisée en ce que le constituant (a) est choisi parmi les résines mélamine-formaldéhyde éventuellement modifiées, les résines urée-formaldéhyde éventuellement modifiées et leurs mélanges.

3. Composition selon la revendication 1, caractérisée en ce que sa teneur en phosphore après durcissement est d'au moins 8 % en masse.

4. Composition selon la revendication 1, caractérisée en ce qu'elle se trouve sous forme d'une solution ou dispersion aqueuse ou contenant de l'eau.

5. Composition selon la revendication 1, caractérisée en ce que le constituant (b) est dérivé d'au moins deux polyols.

6. Composition selon la revendication 5, caractérisée en ce que chaque polyol a une teneur en groupes hydroxy d'au moins 40 % en masse, ou en ce qu'un ou plusieurs polyols ont une teneur en groupes hydroxy inférieure à 40 % en masse et au plus 15 % de tous les groupes hydroxy des polyols dérivent de tels polyols.

7. Composition selon la revendication 1, caractérisée en ce que les polyols sont choisis parmi des polyols aliphatiques et cycloaliphatiques de 2 à 12, de préférence 2 à 6 atomes de carbone.

8. Composition selon la revendication 7, caractérisée en ce que les polyols sont choisis parmi le glycérol, le triméthylolpropane, le pentaérythritol, l'inositol, l'éthanediol, le propanediol et leurs mélanges.

9. Composition selon la revendication 7, caractérisée en ce que l'on utilise en outre comme polyols des polymères contenant des groupes hydroxy et/ou des polyols aromatiques.

10. Composition selon la revendication 1, caractérisée en ce que le constituant (b) se trouve sous une forme modifiée avec des anhydrides d'acides carboxyliques aromatiques et/ou alicycliques, les anhydrides d'acides carboxyliques contenant de préférence des fragments cycliques de 6 atomes de carbone de formule C₆R₄ ou C₆R₁₀ où les restes R peuvent être identiques ou différents et représentent un atome d'hydrogène ou d'halogène ou un groupe méthyle.

11. Composition selon la revendication 1, caractérisée en ce qu'elle contient en outre des agents gonflants azotés qui sont choisis de préférence parmi l'urée, la mélamine, des dérivés de ces composés et leurs mélanges.

12. Composition selon la revendication 1, caractérisée en ce qu'elle contient en outre des polysiloxanes contenant des groupes hydroxy et/ou des agents tensioactifs fluorés, les polysiloxanes étant présents de préférence en une quantité telle que la teneur résultante en SiO₂ de la composition séchée et durcie ne dépasse pas 2 % en masse.

13. Composition selon la revendication 2, caractérisée en ce que les résines (a) sont modifiées avec des éthers glycidyliques aromatiques et/ou des époxydes cycloaliphatiques.

14. Composition selon la revendication 1, caractérisée en ce qu'elle contient en outre des charges et/ou des pigments, les charges et/ou les pigments étant de préférence choisis parmi des substances minérales.

15. Utilisation de la composition selon la revendication 1 pour la préparation de revêtements, en particulier pour le revêtement d'objets en bois, en matière plastique, en matière cellulosique, en caoutchouc et en métal, et pour l'imprégnation de textiles.

16. Mélange d'esters partiels d'acide phosphorique, caractérisé en ce qu'il s'agit d'un mélange, éventuellement modifié avec des anhydrides d'acides carboxyliques, de mono- et diesters d'acide orthophosphorique avec un ou plusieurs polyols, tel que défini dans l'une quelconque des revendications 1 et 5 à 12.

17. Utilisation du mélange selon la revendication 16 pour la préparation de compositions de revêtement ayant des propriétés d'intumescence intégrées.

18. Procédé de préparation du mélange selon la revendication 16, caractérisé en ce qu'il comprend la réaction d'acide polyphosphorique avec le ou les polyols à température élevée et sous pression réduite.

19. Procédé selon la revendication 18, caractérisé en ce que la réaction s'effectue à une température de 100 à 150°C.

20. Procédé selon la revendication 18, caractérisé en ce que la réaction s'effectue sous une pression inférieure ou égale à 160 mm Hg.

21. Matériaux revêtus, caractérisés en ce que le revêtement comprend une composition durcie selon la revendication 1.
